# EUROPEAN PATENT APPLICATION

(11) **EP 0 857 884 A2**
(43) Date of publication of application: **12.08.1998**
(21) Application number: 98300339.3
(22) Date of filing: 19.01.1998
(51) Int. Cl.: F16D 1/08

(54) **Shaft and element combination**

(30) Priority: 30.01.1997 SE 9700273
(71) Applicant: De La Rue Cash Systems Aktiebolag, 642 84 Flen (SE)
(72) Inventor: Lindberg, Henrik, 611 33 Nykoping (SE)
(74) Representative: Skone James, Robert Edmund

(57) **Abstract**

In an arrangement for fixing elements on a shaft (10), the shaft (10) includes a number of holes (101-103) for receiving protruding stop pins (104-106) and each element (11-13) includes through-penetrating grooves (114;122,124; 132,134), which enable the elements to be moved along the shaft and beyond the pings, and blind-grooves (111,113;121, 123;131,133) which form stops against further axial movement of the elements. The shaft (10) has a uniform thickness and includes a number of circular grooves (107,108) on its mantle surface. Each element (11, 51-55-56) includes a snap-arm (115,55) that has an oblique leading edge in the forward direction of movement of the element along the shaft (10). When an element (12) is moved along the shaft (10) with its through-penetrating slots (122,124) in line with the pins (104,105) on the shaft, its snap-arm (126) is able to pass over mantle groove (109) in the shaft, and when the element (12) is essentially in its correct position on the shaft and the blind-grooves (121,123) are in line with the shaft pins (104,105), its snap-arm (126) is able to drop into the nearest mantle groove (108) upon further movement along the shaft, and remain in said groove (108).

## Description

The invention relates to a combination of a shaft and tubular element threaded on the shaft so that the element is secured on the shaft. This combination has many applications but is particularly suited for the mounting of gears and rollers on rotatable shafts, for example for use in document handling equipment such as banknote or security document handling.

In the case of an earlier known arrangement of this kind, elements are mounted by pressing a pin into the shaft, threading an element provided with a blind-groove onto the shaft and into contact with the pin, whereby the element is now locked against rotation relative to the shaft and against axial movement in one direction, and finally threading onto the shaft a so-called groove runner which functions to lock said element against movement in the opposite direction. In the case of an arrangement that includes four elements for instance, this procedure must be repeated three times in order to fix all four elements. Because the groove runner is a loose element, it requires a separate step in his regard.

In accordance with the present invention, we provide a combination of a shaft and a tubular element threaded on the shaft, the shaft having at least one protruding stop pin; and the tubular element having a through hole which enables the element to be moved along the shaft past the stop pin, a blind hole into which the stop pin is received when the element is suitably rotated about the shaft whereby further movement of the element along the shaft is prevented, and the element including at least one snap-arm which, as the stop pin enters the blind hole, snaps into engagement with a cooperating formation on or in the shaft so as to prevent movement of the element along the shaft in the opposite direction.

The present invention simplifies the aforesaid procedure, for instance by enabling all pins to be fitted in a first step and by eliminating one step, i.e. the step of fitting the groove runners.

In a preferred arrangement, the shaft is given a substantially uniform thickness and is provided with a plurality of circular grooves on its outer surface or mantle surface, and each element includes at least one snap-arm that has a bevelled leading edge in the direction of movement of the element along the shaft.

With this arrangement, each element will be locked against rotational movement and against axial movement in the forward threading direction, by coaction of the stop pin with the blind-grooves in the elements, and also against axial movement in the reverse direction, by virtue of the engagement of the snap-arm(s) with the groove in the mantle surface of the shaft.

Typically, two stop pins will be provided extending in opposite radial directions although in some cases a single pin or key is possible. Where a pair of stop pins are provided, these are conveniently defined by a single stop pin member extending through the shaft.

Typically, the element will have two snap-arms which will usually be arranged opposite one another although they could be arranged in a non-symmetrical manner.

The manner in which the or each snap-arm engages with a cooperating formation on the shaft can be chosen as desired and may include a projection on the snap-arm which engages a recess in the shaft surface or a protrusion on the shaft which engages in a recess or hole in the snap-arm.

Some examples of the invention will now be described with reference to thee accompanying drawings, in which:-
Figure 1 is an illustration of a first example, showing a plastic element mounted on a shaft, a plastic element in the process of being mounted on the shaft, and a plastic element which is to be fitted to the shaft;
Figure 2 shows the same elements as those shown in Figure 1 but from another angle;
Figure 3 is a sectional view of a loose plastic element threaded on the shaft and shows the element in a position ready for movement along the shaft;
Figure 4 shows the element of Figure 3 turned on the shaft through 90° and locked in position;
Figure 5 shows an alternative embodiment of the snap-arms on the plastic elements shown in Figures 1-4;
Figure 6 is a view similar to Figure 1 but showing a third example;
Figure 7 illustrates an element of the type shown in Figure 6 in more detail;
Figure 8 illustrates a further alternative element;
Figure 9 illustrates a modified form of the example shown in Figure 1;
Figures 10A and 10B illustrate an element similar to that shown in Figure 8 in two different rotational positions on a shaft; and,
Figures 11A and 11B are views similar to Figure 10 but of a still further example.

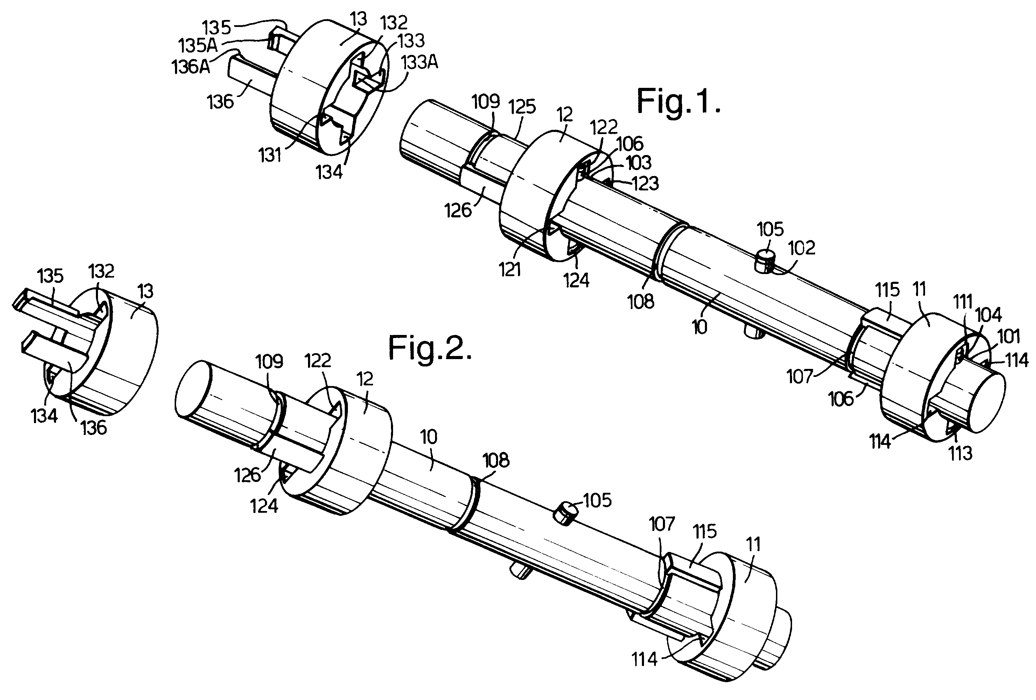

The arrangement shown in Figure 1 includes an elongated shaft 10 and three mutually similar plastic elements 11,12,13. The shaft 10 includes three through-penetrating holes 101,102,103 each accommodating a respective outwardly projecting pin 104,105,106. Each plastic element 11,12,13 includes through-penetrating slots or grooves 114;122,124;132,134 that enable the plastic element to be moved axially along the shaft and past the pins, and also includes so-called blind-grooves 111,113; 121,123;131,133 which after turning the element relative to the shaft in line with the pins stops further axial movement of the element along the shaft, by virtue of the abutment of the element with said pins.

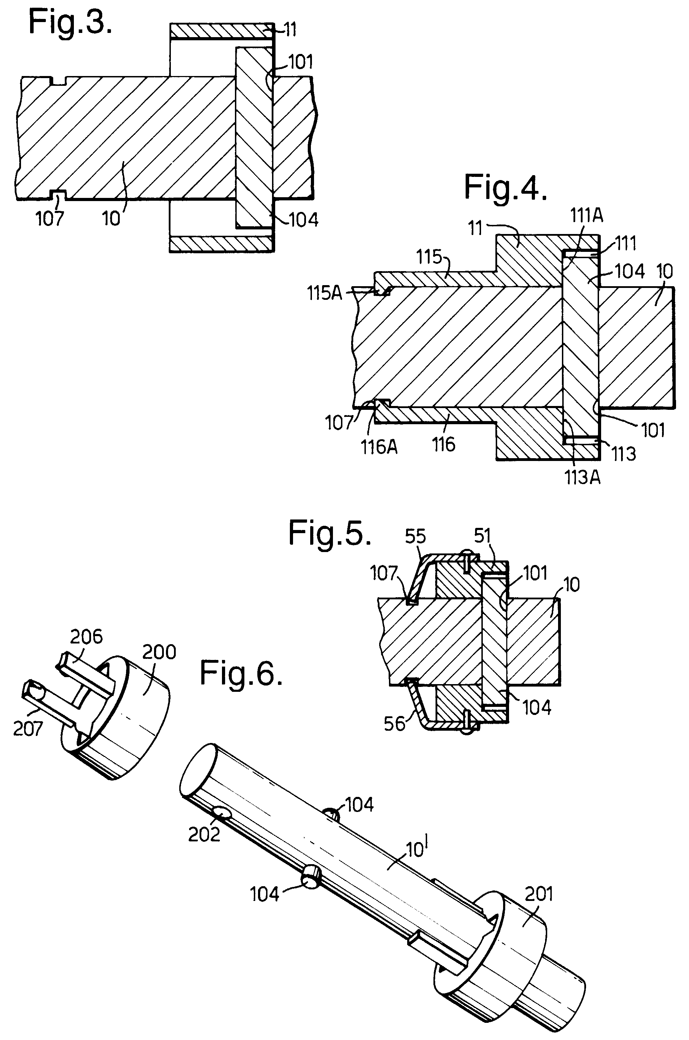

The plastic element 11 has an upwardly facing blind-groove 111 and a downwardly facing blind-groove 113, said grooves having bottom surfaces 111A,113A respectively (see Figure 4) against which the stop pin 104 abut after having moved the element to the right in the Figure.

The plastic elements 12 and 13 are turned through 90° in relation to the element 11 and therefore the through-penetrating grooves 122 and 124 extend upwardly and downwardly respectively. The element 12 can be moved to the right and past the stop pin 106, by virtue of the fact that the slots 122,124 are through-penetrating (lack bottoms) . When the element 12 has passed the stop pin 106, the element is turned through 90°, e.g. clockwise, so that blind-grooves 121,123 will face respectively upwards and downwards. Further movement of the element to the right will bring the stop pin 105 into abutment with the bottoms of respective blind-grooves 121,123, thereby preventing further movement to the right.

The plastic element 13 has through-penetrating slots 132,134 that face upwardly and downwardly respectively, and blind-grooves 131,133 that face respectively to the left and to the right. It is clearly evident that the blind-groove 133 has a bottom 133A.

Hitherto, the description has been concerned with how plastic elements that have been threaded onto a shaft or axle are prevented from rotating relative to the shaft and displaced therealong in one direction. With the intention of preventing movement of the elements along the shaft in the other direction, the shaft, which has a generally uniform thickness, is provided with a number of circular grooves 107,108,109, so-called mantle grooves, on its outer surface or mantle surface, and each plastic element 11,12, 13 is also provided with snap-arms 115,116:125,126; and 135,136 respectively, said snap-arms having a bevelled leading edge as seen in the forward movement direction of the element along the shaft. This bevel can best be seen at 135A,136A on the arms 135,136.

In this embodiment, when a plastic element, e.g. the element 12, is moved along the shaft 10 with its through-penetrating grooves 122,124 in line with the pins 104,105, 106 on the shaft 10, the bevelled leading edges of the snap-arms 125,126 will cause the arms to pass over the mantle groove 109. After having moved the element 12 further along the shaft to the proximity of the stop-pin 105 (but before the stop pin 105 enters the grooves 122,124), the element is rotated so as to bring the blind-grooves 121,123 into line with the stop pin 105. The element is then moved further along the shaft until the stop pin 105 meets the bottom of the blind-grooves 121,123, whereupon the snap-arms 125,126 will fall down and snap into the circular groove 108 with respective straight back edges in abutment with the rear (the left side edge) of the groove 108.

The plastic element 12 is now locked against rotation and against axial movement relative to the shaft 10.

The arrangement 10-11-12-13 is shown somewhat from the rear in Figure 2, from which the through-penetrating slots 122,124;132,134, the snap-arms 135,136, and the through-penetrating slot 114 can be seen more clearly.

Figure 3 is a sectioned view of part of the shaft 10 with groove 107, stop pin 104, and the plastic element 11. The placement of the sectional view is such that one of the snap-arms, e.g. the snap-arm 115, is obscured by the shaft 10. Figure 4 shows the same elements as the sectional view of Figure 3, but rotated through 90°. It is clearly evident from the Figure that the stop pin 104 lies against the bottoms 111A,113A of the blind-grooves 111 and 113 and that the free ends of the snap-arms 115,116 have slid down into the circular groove 107, with their respective rear edges 115A,116A lying directly against the rear (left) side edge of the groove 107.

The arrangement described in detail above can, of course, be modified in many ways within the scope of the following claims. For instance, the elements to be fixed positionally on the shaft may be made of a material other than a plastic material. Neither need the snap-arms be an integral part of the element.

Figure 5 is a sectional view of an element 51-55-56 threaded on the shaft 10. The element includes a cylindrical part 51, which has through-penetrating slots and blind-grooves similar to the elements 11-13 but is made of cast metal as opposed to plastic, and two angled snap-arms 55,56 made of spring steel and screwed firmly on mutually opposite sides of the cylindrical part. The free ends of the snap-arms define an angle of less than 90° with the shaft nearest the cylindrical part, whereby when the ends of the arms have slid down into the mantle grooves 107 on the shaft 10 subsequent to further movement of the element to the right, the element is duly locked against movement to the left as a result of the mechanical lock achieved between said ends and the shaft in said groove 107.

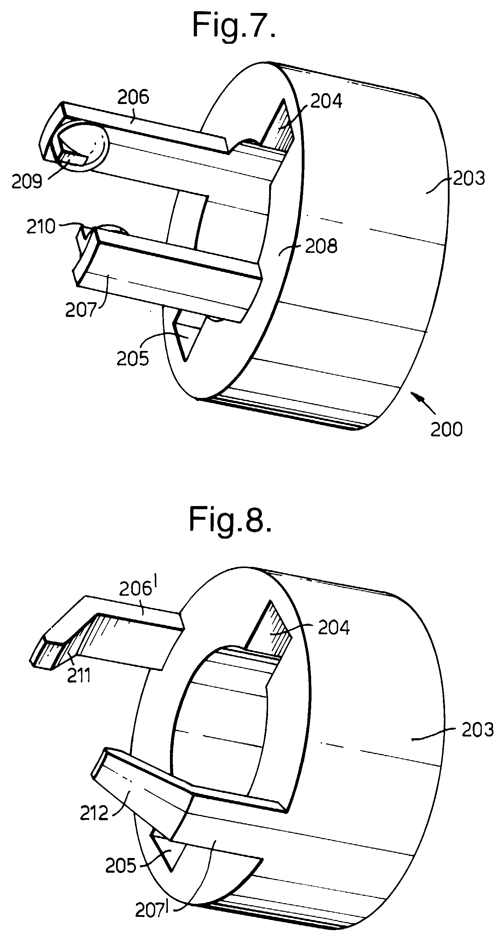

Figure 6 illustrates a shaft 10' similar to the shaft 10 shown in Figure 1 having a stop pin 104 and a plastic element shown at two positions 200,201. The shaft 10' has a pair of recesses 202, one of which can be seen in Figure 6, which may be blind or defined by a bore extending through the shaft. The element 200,201 is shown in more detail in Figure 7. The element is a one-piece plastics moulding having a cylindrical section 203 having a pair of through-penetrating grooves 204,205 and a pair of snap-arms 206,207 cantilevered out from a rear face 208 of the section 203 and offset by 90° from the grooves 204,205. Each arm 206,207 carries a radially inwardly extending projection 209,210. A pair of blind-grooves, not visible in Figure 7, similar to the blind-grooves 121,123 extend through the section 203 generally parallel with the arms 206,207.

When the element 200 is threaded onto the shaft 10', initially the arms 206,207 are rotationally offset from the recesses 202 while the grooves 204,205 are aligned with the stop pins 104. This allows the element 200 to be slid along the shaft 10' past the recesses 202 and stop pins 104 to a position adjacent that shown at 201. The element is then rotated through 90° so as to bring the blind-grooves into alignment with a further stop pin 104 (not shown) and the element is moved further to the right, as seen at 201 in Figure 6, until the stop pin engages the bottoms of the blind-grooves. At the same time the projections 209,210 will snap into recesses (not shown) similar to the recesses 202. The element is then fixed against rotational and axial motion.

Figure 8 illustrates a modified form of the element shown in Figure 7 in which the arms 206',207' have angularly inwardly projecting sections 211,212 instead of the projections 209,210 of Figure 7.

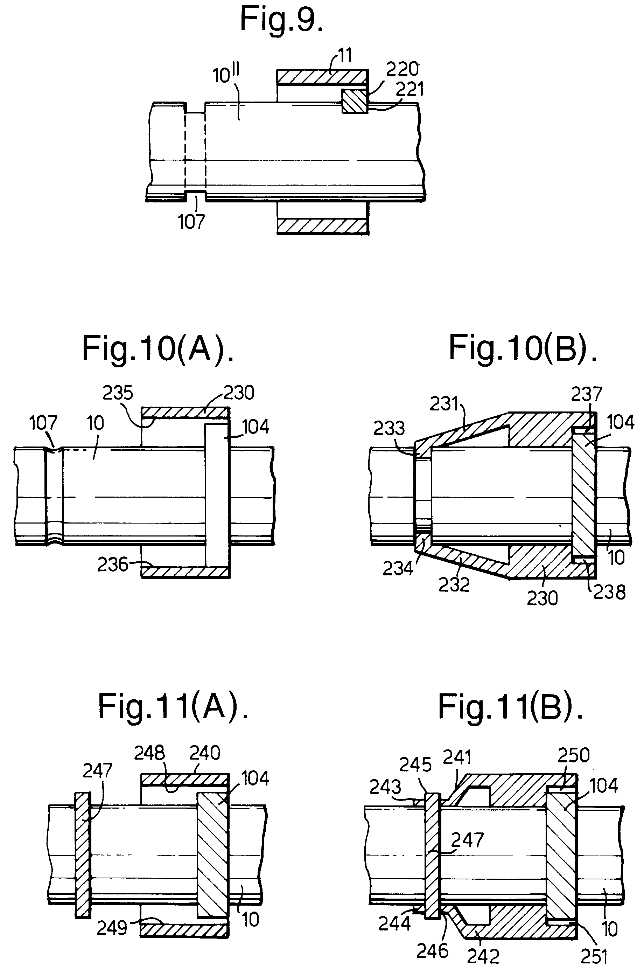

In the examples described so far, a single stop pin 104 is provided extending through a bore in the shaft. Figure 9 illustrates a modified form of the arrangement shown in Figure 1 in which a shaft 10" has a key element 220 secured in a recess 221 so as to provide a single, outwardly projecting pin. The rest of the construction of the shaft 10" and the element 11 is as in the Figure 1 example.

Figures 10A and 10B illustrate an arrangement using an element similar to that shown in Figure 8. In this case, the shaft 10 is constructed as shown in Figure 1 with a groove 107 extending around the shaft and a projecting pin 104. The element is shown at 230 and has a pair of snap-arms 231,232 with radially inwardly extending projections 233,234. Initially, the element 230 is threaded on the shaft 10 so that through holes 235,236 are aligned with the stop pin 104 (the snap-arms not being shown in Figure 10A). As the element 230 approaches its final position, it is rotated through 90° so as to bring blind-grooves 237,238 into alignment with the stop pin 104 and as the element 230 engages the stop pin 104, the projections 233,234 snap into the groove 107.

Figure 11 illustrates a further example in which an element 240 has a pair of snap-arms 241,242 with axially extending sections 243,244 which engage the shaft 10 in use. Each section 243,244 has an aperture 245,246 while a pin 247 extends through the shaft 10 in place of the groove 107.

When the element 240 is threaded on to the shaft 10, it is initially arranged with through grooves 248,249 aligned with the pin 104 and is then rotated through 90° as shown in Figure 11B to align blind-grooves 250,251 with the pin 104. When the element engages the pin 104, the apertures 245,246 of the snap-arms 241,242 engage over projecting portions of the pin 247 to lock the element in place.

## Claims

1. A combination of a shaft (10) and a tubular element (11,12,13) threaded on the shaft, the shaft having at least one protruding stop pin (104-106); and the tubular element having a through hole (114;122,124;132,134) which enables the element to be moved along the shaft past the stop pin (104-106), a blind hole (111,113;121,123;131,133) into which the stop pin is received when the element is suitably rotated about the shaft whereby further movement of the element along the shaft is prevented, and the element including at least one snap-arm (115,116;125,126;135,136) which, as the stop pin enters the blind hole, snaps into engagement with a cooperating formation (107-109) on or in the shaft (10) so as to prevent movement of the element along the shaft in the opposite direction.

2. A combination according to claim 1, wherein a pair of stop pins (104-106) are provided extending in opposite radial directions.

3. A combination according to claim 2, wherein the pair of stop pins are provided by a single stop pin member (104-106) extending through the shaft (10).

4. A combination according to any of the preceding claims, wherein the element has two snap-arms (115,116;125, 126;135,136), typically arranged opposite one another.

5. A combination according to any of the preceding claims, wherein the or each snap-arm includes a radially inwardly extending projection which engages a recess in the shaft surface.

6. A combination according to claim 5, wherein the recess comprises a circumferential groove (107-109).

7. A combination according to claim 5 or claim 6, wherein the or each snap-arm has an oblique leading edge (135A,136A) as seen in the forward direction of movement of the element along the shaft.

8. A combination according to any of claims 1 to 4, wherein the or each snap-arm includes a recess or hole (245,246) which engages a radially outwardly extending protrusion (247) on the shaft.

9. A combination according to any of the preceding claims, wherein the element (10) is formed from a single piece of, for example, plastics.

10. A combination according to any of claims 1 to 8, wherein the element includes a tubular part (51) made from cast steel to which the or each snap-arm (55) is connected, the snap-arm(s) being made of spring steel.
